# EUROPEAN PATENT APPLICATION

(11) **EP 1 117 184 A1**
(43) Date of publication of application: **18.07.2001**
(21) Application number: 00100824.2
(22) Date of filing: 17.01.2000
(51) Int. Cl.: H04B 1/707, H04J 11/00

(54) **Method and apparatus for a CDMA cellular radio transmission system**

(71) Applicant: MATSUSHITA ELECTRIC INDUSTRIAL CO., LTD., Kadoma-shi, Osaka 571-8501 (JP)
(72) Inventor: Wiebke, Thomas, 63225 Langen (DE); Seidel, Eiko, 64283 Darmstadt (DE)
(74) Representative: Grünecker, Kinkeldey, Stockmair & Schwanhäusser Anwaltssozietät

(57) **Abstract**

A method of transmitting/receiving signals in a CDMA cellular radio transmission system comprising modulating a signal source with a channelization code having a length corresponding to a spreading factor to form a signal intended for transmission over a radio link. According to the invention, the spreading factor is adapted for use in said modulation step. When receiving the modulated signals, the spreading factor used in an adaptive manner during modulation is determined and employed during demodulation.

Further, the invention relates to a corresponding transmitter and receiver embodied preferably as a base station and a mobile station, respectively.

## Description

The present invention relates to a method and apparatus for a CDMA cellular radio transmission system and more particularly to a method of transmitting or receiving signals in such a system according to the preamble portions of claims 1 and 10. Furthermore, the present invention relates to a transmitter or receiver in a CDMA cellular radio transmission system according to the preamble portions of claims 14 and 21.

Due to advanced techniques in cellular radio transmission systems, the capacity of these systems has been significantly increased. In contrast to time division multiple access (TDMA) and frequency division multiple access (FDMA) systems, the users of code division multiple access (CDMA) systems are transmitting at the same time and frequency. They are distinguished by their individual code that is known to the receiver. Codes can be generated that are orthogonal to each other to decrease mutual interference. Since orthogonal transmission requires synchronized signals, it is usually applied in the downlink (e.g. IS-95, UMTS W-CDMA) but could also be applied in the uplink when time advance is used to align the arriving signals at the base station.

Forward error correction (FEC) is one technique to provide a reliable connection and to fulfill a required quality-of-service (QoS). This technique codes k information bits in n coded bits, thereby adding a redundancy of (n-k) bits to allow a certain amount of errors to be corrected at the receiver. The code rate is defined as k/n. To fulfill a required QoS without wasting resources, transmission power and code rate has to be selected carefully. Excessive power per transmitted information bit results in excessive interference to other users in the system and can degrade system performance significantly.

US 5,729,557 describes a method and apparatus for using multiple code rates for forward error correction in a cellular digital data radio communication system. When the channel path loss is large, it is possible that the required transmit power exceeds the maximum allowable power of the system or the maximum transmit power capability of the mobile unit. In such cases, the mobile unit selects a lower code rate. Base station receiver sensitivity improves as the code rate decreases, so the result is similar to increasing the transmitter power.

Furthermore, the mobile unit code rate selection can be based on the quantity of data to be transmitted and a base station can determine the code rate used by a mobile unit by attempting to decode all code rates and choosing the best result.

A further conventional approach to fulfill a required QoS is to adjust the transmit power in order to compensate phenomena such as fading, shadowing or path loss. Depending on the type of deterioration, power can be changed very quickly and without large modification at the transmitter site. Further, fast power control is essential to combat the near-far-effect, i.e. the path loss increases with distance between mobile station and base station.

A combined power control and FEC control technique for mobile radio systems is disclosed in EP-A 790 713. This system features individual transmitter-receiver pairs which adaptively determine the minimum power and FEC required to satisfy a specified QoS. This allows to optimize each user's code rate to the current channel condition and to limit the coding overhead of the individual connection.

A further example for adaptive FEC in a data communication system is disclosed in US 5,699,365, which discloses an apparatus and method for dynamically changing FEC parameters based on communication channel conditions, such a noise level or error rate. When the channel parameter is not within a predetermined variance of a threshold level, a revised FEC parameter having a greater or lesser degree of FEC capability is selected and transmitted.

Different approaches to combat QoS constraints include varying the data rate as disclosed for example in US 5,734,646. To this end a received pilot strength data is used to determine a data rate which satisfies all adjacent cell interference concerns.

In a CDMA system, the number of individual codes used to distinguish between different mobile stations or base stations, commonly called channelization codes, is limited. This can lead to a situation of channelization code shortage, where no orthogonal channelization code is available anymore. On the other hand, orthogonality is essential to minimize interference between users (multi-user interference). The orthogonality provides that these codes have zero cross-correlation. Under ideal conditions, users in one cell do not interfere with each other at all, such that the intra-cell interference is substantially non-existent. In situations with multi-path propagation, this property gets partly lost.

To prevent the use of non-orthogonal codes, it can be attempted to shift some load of a particular cell with high traffic to surrounding cells. However, there is a limit to the use of this technique since surrounding cells might also be loaded. Also, efficiency decreases because the mobile stations cannot use the best suited cell, which results in higher transmit power with an impact on the generation of interference and the lifetime of the user's battery.

The above described conventional techniques are unsuitable for combating the problem that the number of orthogonal channelization codes is limited. In future systems, this will become even more severe since advanced receiver techniques will increase the system capacity so that the number of channelization codes simultaneously in operation will increase. Another reason for channelization code shortage is that in CDMA systems, a large portion of mobile stations perform soft handover, i.e. they transmit and/or receive from multiple base stations. Consequently, a channelization code has to be allocated in each base station for a single connection. Mobile stations transmitting packet data might also require the allocation of channelization codes during periods of no data transmission because power control has to be maintained.

The object of the present invention is to use existing channelization codes more efficiently and to prevent channelization code shortage without introducing new non-orthogonal channelization codes.

The general principle underlying the present invention is an adaptive spreading factor used during modulation or demodulation of the transmitted signals. It will be appreciated that the spreading process transforms each encoded bit into a sequence of x chips whereas the number x corresponds to the chosen spreading factor and the sequence corresponds to the selected channelization code. Consequently, the number of available channelization codes depends on the spreading factor of each physical channel.

According to one aspect of the invention, the method of transmitting signals in a CDMA system adapts the spreading factor used in modulating a source signal with a channelization code having a length corresponding to the spreading factor.

According to another aspect of the invention, a method of receiving signals is provided wherein the spreading factor used in an adaptive manner for modulating the received signal is determined and the received signals are demodulated with a channelization code having a length corresponding to the used spreading factor.

Further, the transmitter according to the present invention employs a control unit which adapts the spreading factor for use in a modulation means and the receiver according to the present invention determines the used spreading factor in the received modulated signals.

Preferably, the adaptation of the spreading factor is made on the basis of the availability of channelization codes in the system. This provides an effective management of the number of available channelization codes and migrates the problem of channelization code shortage.

According to a preferred embodiment of the invention, the adapted spreading factor is signalled over a radio link from the transmitter to the receiver. Consequently, a receiver can easily obtain information on the used spreading factor and adapt its demodulation unit more quickly.

According to a further advantageous embodiment, the source signal to be transmitted over the radio link is encoded, prior to modulation, with a forward error correction (FEC) code rate, and the FEC code rate is suitably adapted. This provides the particular advantage that adaptation of the spreading factor is done in coordination with the adapted FEC code rate. For a given band width, increasing the FEC code rate allows to increase the spreading factor with a corresponding magnitude.

Preferably, the FEC code rate is adapted in accordance with the determined availability of channelization codes and/or the adapted spreading factor and signalled over the radio link in order to provide this information more quickly at the receiver. Further, the control unit can also adapt the source data rate in accordance with the determined availability of channelization codes and/or the adapted spreading factor.

Further it is preferred that the adaptation of the spreading factor and/or the code rate is carried out in accordance with the measurement of at least an additional system parameter such as channel quality, interference, system capacity, transmit power or link quality.

According to a further preferred embodiment, the adaptation for the spreading factor and/or the FEC code rate is carried out on an individual basis for at least one user of the system. Consequently, individual users can be selected which are most suited for the adaptation process without degradation of quality-of-service.

The present invention will be more readily understood from the following detailed description of preferred embodiments with reference to the accompanying drawings.
FIG. 1 shows a CDMA cellular radio transmission system in which the present invention can be employed;
FIG. 2 shows an exemplary code tree for generation of orthogonal variable spreading factor codes;
FIG. 3 provides a table of possible FEC code rates;
FIG. 4 shows a simplified block diagram of a transmitter/receiver pair; and
FIG. 5 shows a flow chart illustrating an example of the inventive method.

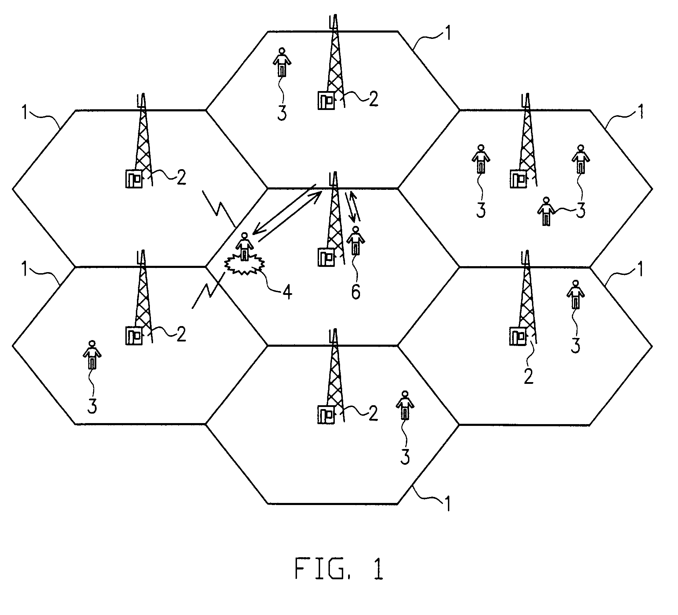

FIG. 1 shows a CDMA cellular radio transmission system consisting of a plurality of adjacent cells 1, each of which having at least one base station 2 located in its center. Each cell serves a plurality of mobile stations 3, some of which will be in the idle mode, some of which have an uplink and/or a downlink connection to one or more base stations. Particularly when mobile stations move away from the base station, they have to transmit with higher power and will interfere with the adjacent base stations, such as for example mobile station 4 in the center cell of FIG. 1 will interfere with the two left neighbouring cells. This is called inter-cell interference and is particularly harmful for cells in CDMA systems using the same frequency. Additionally, each mobile station causes interference in its own cell, e.g. mobile station 4 with mobile station 6, which is called intra-cell interference.

In CDMA systems, inter-cell interference is reduced by the use of orthogonal channelization codes in the transmitter. For third generation mobile systems like UMTS W-CDMA, orthogonal variable spreading factor (OVSF) codes are used, which can preserve orthogonality of physical channels with different data rates and spreading factors. A more detailed discussion of OVSF codes can be found in UMTS specification version 0.56.0 1999-1, available from the European Telecommunication Standards Institute (ETSI), in particular chapter 6.2.1.

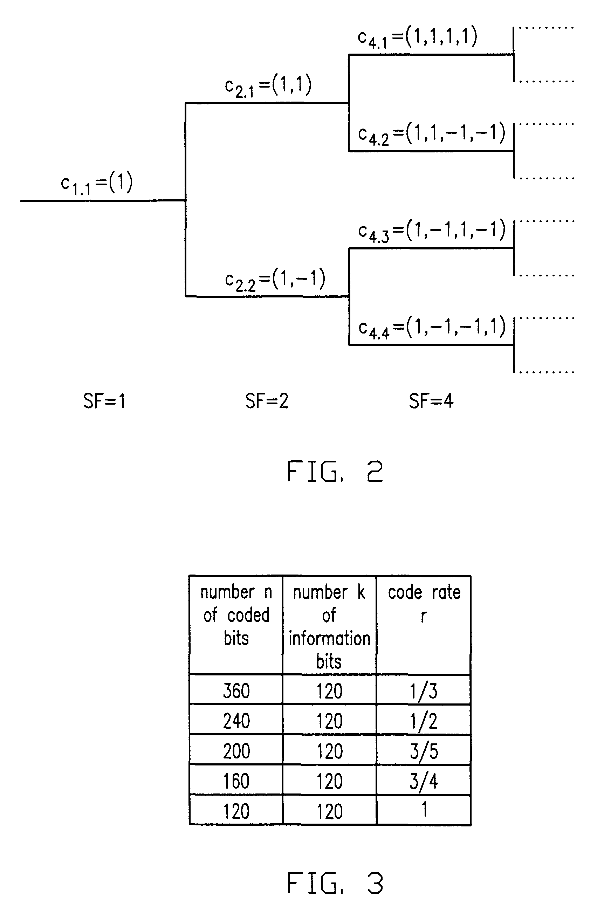

As shown therein, OVSF codes can be defined using the code tree as illustrated in FIG. 2. It can be seen that e.g. for a spreading factor of SF = 4 there are only four different orthogonal codes available (C_{4,1}...C_{4,4}), wherein the codes are defined by C_{spreading factor, index.}

Each level in the code tree defines a channelization code of a length SF, corresponding to a spreading factor of SF. All codes within the code tree cannot be used simultaneously in a cell but are restricted by the rule that a code can be used by a mobile station if and only if no other code on the path from the specific code to the root of the tree or in the subtree below the specific code is already used by the same mobile station in a cell. This means that the number of available channelization codes is not fixed but depends on the spreading factor of each physical channel.

In figure 3, a table gives an example for different code rates. As the number of k information bits are coded into a different number of n coded bits, these bits must then be mapped to the burst structure of the physical channel and will require a certain spreading factor for transmission with a required maximum delay. Assuming a code rate of 1/3, 120 information bits are coded into 360 bits for transmission. Other code rates are given in the table. Moreover, variable code rates having good coding properties can easily be generated by rate-compatible punctured convolutional codes. A more detailed discussion on such codes can be found for example in IEEE Transactions on Communications, vol. 38, November 1988, pp. 389-400. In brief, at the output of the encoder some bits are periodically eliminated (punctured) using a known algorithm or pattern. This will result in a specified code rate. The commonly used Viterbi decoder can be applied to punctured codes without any complexity increase by inserting dummy bits at the position where bits have been punctured.

In the following, an example is given. Assuming that for a code rate r = 1/3 and n = 360 encoded bits, a spreading factor of 16 is used to transmit 5,760 bits per time interval. If the environment allows due to improvement of the physical channel to switch to a coding rate of e.g. 2/3 without exceeding the allowable interference limit, this would enable to use a physical channel with a spreading factor of 32 since half of the number of bits, namely n = 180, will have to be transmitted. Switching the spreading factor results consequently that an additional channelization code of SF 32 is made available for use in this cell.

It should be appreciated that the code rate can only be increased to the point where a higher spreading factor can be used if the quality of services constraints are still met. If the coding scheme does not have such a fine granularity, the coded bits could also be punctured to the exact code rate where a higher spreading factor can be used. In case the FEC code rate does not fulfill the required QoS and a lower code rate would give a better performance, a physical channel with a lower code rate and decreased spreading factor must be used.

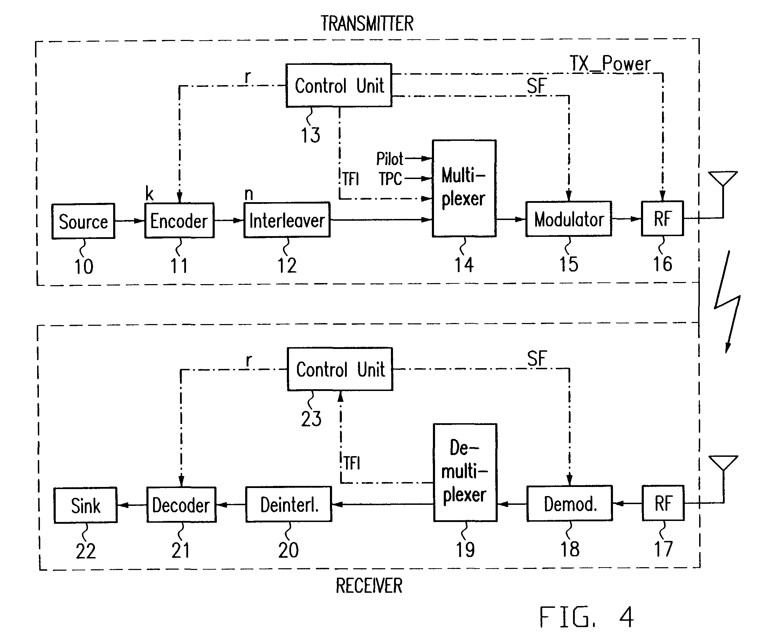

FIG. 4 shows a simplified block diagram of a transmitter and a receiver of the present invention. Each part could be either embodied as a mobile station or a base station, i.e. perform uplink or downlink connection. In the transmitter one or a plurality of signal sources 10 generate a certain amount of data (k bits) that is stored in a buffer to be transmitted. The k bits are applied to an encoder 11 where redundancy is added to reduce the error probability in the received signals. The encoder 11 generates n coded bits which are subsequently applied to an interleaver 12. Pursuant to interleaving, the n coded bits are supplied to a multiplexer 14 where a signal burst is mapped including pilot bits, transmit power control (TPC) bits and transport format indicator (TFI) bits. Burst mapping is generally known in the art such that a detailed discussion thereof has been omitted for reasons of simplicity.

In a modulator 15 the data output from the multiplexer 14 is modulated with the particular access scheme that is used, e.g. spreading in case of CDMA. The spreading process will transform each encoded bit into a sequence of x chips, whereas the number x corresponds to the chosen spreading factor and the sequence corresponds to the selected channelization code. Finally, in the RF part 16 the transmit signal is formed and amplified to get a predetermined transmit power, which is adjusted in accordance with a signal from control unit 13 to balance the power per transmitted information bit for the used code rate and spreading factor.

It is noted that the control unit 13 is adapted to adjust different FEC code rates in the encoder selected among a plurality of possible code rates in accordance with a criteria which will be explained later. A change of the FEC code rate is signalled to the transmitter with the TFI bits which are included in the transmitted signal in the multiplexer 14. The control unit 13 also initiates a change of the spreading factor in the modulator 15 and adapts the transmit power in the RF part 16 accordingly. The reconfiguration of the interleaver and the multiplexer that is needed for a change of the code rate and the spreading factor is not included in the simplified figure.

The adaptation of the spreading factor and/or FEC code rate is carried out on the basis of the availability of channelization codes, which will be described in further detail below. Moreover, the adaptation considers system parameters such as channel quality, interference, system capacity, transmit power or link quality. These parameters can be measured and reported from a receiver to the transmitter on request and/or periodically. A further factor for the adaptation of the spreading factor and/or FEC code rate is the information bit rate of the source 10.

The corresponding receiver comprises an RF part 17, a demodulator 18, and demultiplexer 19, a deinterleaver 20, a decoder 21 and a signal sink 22. According to the described embodiment, a change of the code rate and spreading factor is decided by the transmitter and signalled to the receiver via the TFI bits. The demultiplexer 19 decodes the TFI bits and supplies same to a control unit 23. This unit again configures the demodulator 18, the demultiplexer 19, the deinterleaver 20 and the decoder 21. More specifically, the control unit 23 determines the spreading factor with which the received signals have been modulated at the transmitter and signals same to the demodulator 18 for demodulating the received signals with the appropriate channelization codes. With each TFI bit, the receiver knows exactly the used parameters, e.g. FEC code rate, spreading factor, rate matching factor, interleaving length, kind of transport channel used, etc. of the transport format that was used for coding and multiplexing at the transmitter. A very simple scheme is to indicate with the TFI bit the format of the frame that is received next. If I/Q multiplexing of data and control bits is used, the TFI bits could be demodulated separately at the beginning of the demodulation process and identify the just received (buffered) frame.

The signalling of the coding rate can be realized in different ways. Other means to identify the transport format are blind rate detection or higher layer signalling. For the control mechanism of the code rate or spreading factor, other methods are also possible, e.g. where the receiver requests the transmitter to use certain transmission parameters.

The resource allocation of the base station will realize when a situation of code shortage occurs and the interference limit in the cell has not been reached. The number of used codes is known by the base station since they are allocated by the system.

If code shortage occurs, meaning no codes are available while interference is not at the limit, the base station will go into a procedure to find a mobile station who is suited based for a spreading factor increase. The selection of the appropriate user and code rate has to be done very carefully because every increase in transmit power of a fully loaded system affects the quality of all other users.

The user that encounters a very good channel, e.g. because it is near his home base station will contribute less to intra-cell interference than others. Within a certain radius from the base station the capacity is limited by the intra-cell interference and inter-cell interference can be neglected. If the user within that radius changes the code rate due to code shortage it will have little or no effect on the interference of the surrounding cells.

An increase in the code rate and the corresponding increase of the spreading factor does not only release additional channelization codes but could also increase spectrum efficiency, since there is a limit in the use of power control. If the transmit power is already very low, a further decrease might not give any more usable resources to the cell and situations might be encountered where a further reduction is not possible due to the limited dynamic range. Even if additional interference will be generated by an increased code rate, it might be preferable in terms of system capacity. A non-orthonogal code will be much more harmful to the system than low interference users with a higher code rate. In particular for high-data rate users any change of the transmit power has to be done very carefully in respect to other users' quality and system stability.

The interference situation and/or link quality can be defined in terms of several parameters such as signal strength, carrier-to-interference ratio (CIR), path loss, transmit power, signal-to-noise ratio, cell load, bit-error-rate, frame-error-rate, raw bit-error-rate etc. Such a quality indicator is continuously updated by each mobile station or base station. The decision to use a different spreading factor and/or code rate can also be reversed when conditions change. A hysteresis function can prevent a hopping between states. The degree of hysteresis is controlled by appropriate settings of upper and lower decision thresholds.

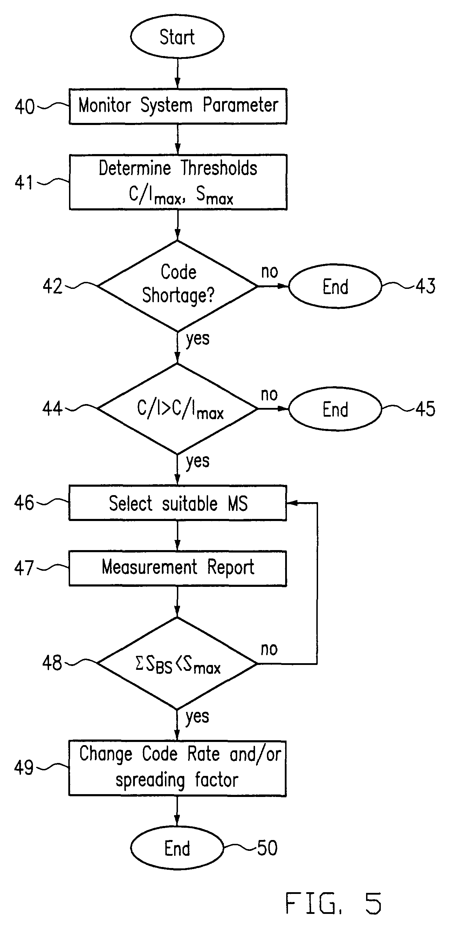

FIG. 5 shows a flow chart illustrating the inventive method as carried out in a transmitter embodied as a base station. More specifically, it explains how the spreading factor could be changed in case of code shortage. When the system is in operation, the base station monitors several system parameters or receives information from a base station controller, which usually has the control of several base stations or cells in a cluster. This monitoring (step 40) provides information on the surrounding cells, the cell loads and interference situations. The radio resource control protocol is responsible to allocate and release resources and to control the cell load.

Under consideration of these parameters, the base station determines thresholds of maximum allowable interference C/Iₘₐₓ in a cell and the maximum sum of signal strength Sₘₐₓ of the surrounding base stations at a particular position of a mobile station. Then, the base station will in step 41 identify a situation where a channelization code shortage occurs in step 42. The base station would allow to increase the spreading factor and to use additional codes, if the momentarily measured carrier-to-interference ratio C/I is lower than the determined threshold C/Iₘₐₓ (step 44). If the system is not fully loaded yet, i.e. the momentarily measured C/I is larger than the threshold C/Iₘₐₓ, a suitable mobile station for change of the spreading factor will be selected in step 46.

A criteria could be to select that mobile station having the smallest transmit power or which is nearest to the base station. Also, the type of service which the mobile station provides could be considered. In step 42, the base station requests that the selected candidate mobile station transmits a measurement report which indicates the received power of all surrounding base stations. If such received power of all surrounding base stations is smaller than the predefined threshold Sₘₐₓ, which is determined in step 48, the code rate and spreading factor can be changed since the inter-cell interference caused by the change will rarely affect the surrounding base stations. The procedure to change the code rate and spreading factor is triggered in step 49 with the consequence that channelization codes will be released that can be allocated to other uses.

For simplicity the above-described flow chart only shows how the FEC code rate and spreading factor is increased to release channelization codes. There can be several levels of code rates and the sum of signal strength Sₘₐₓ of the surrounding base stations of that particular mobile station is monitored at all times to switch back to a lower code rate when the signal strength of the surrounding base stations becomes too strong.

The described invention can be improved by a proper selection of an automatic repeat request (ARQ) scheme. In a situation where the code rate is too high for a particular channel environment, a high bit error rate makes transmission unsatisfactory. In this case, ARQ is used and there will be several re-transmissions before the data is received correctly. If the erroneous packets are stored in the receiver and combined with the retransmitted packets, performance is consequently increased. Such an ARQ scheme is called hybrid ARQ type II or type III. Given the reasons above the adaptation of the spreading factor and/or FEC code rate might potentially be done in accordance with a switch of the retransmission algorithm used. A more detailed discussion on hybrid ARQ schemes is found for example in IEEE Transactions on Communications, vol. 38, No. 8, August 1999, pp. 1133-1137.

Simple communication systems often do not support variable code rates. The FEC code is designed to be an optimum for that specific code rate but is not variable. Bit mapping through the physical channel is accomplished by non-optimum puncturing or repetition. Terminals used in such simple systems usually do support an option where no FEC coding at all is used. This is useful for services that are very error tolerant or do encoding/decoding at the application layer. The previously described algorithms can also be used in connection with the no FEC encoding option, meaning the encoder is switched off, which results in a code rate of r = 1. In this case, the increase of spreading factor and the release of additional channelization codes will be very high but also the transmit power will increase. Since the bit error rate is expected to increase rapidly, it is preferable in this case to use an ARQ scheme mentioned above.

Certain applications as voice, video etc. require a dedicated encoder, so-called source encoder. Such an encoder might be located in other protocol layers or at different locations in the network. Source encoders often have different modes that correspond to different code rates. One advantage of the present invention is the possibility to control the mode of the source encoder that might not necessarily be part of the transmitter. The need for a change of the spreading factor can also result from different data rates which are variable depending on for example the required speech quality, speech activity (e.g. IS-95) or channel conditions (e.g. GSM adaptive multi-rate AMR codec). UMTS will support the AMR codec with smooth transmission from second generation GSM to third generation UMTS. Depending on the data rate, the AMR will use either a spreading factor of 256 for low rate AMR's or a spreading factor of 128 for higher data rates.

## Claims

1. A method of transmitting signals in a CDMA cellular radio transmission system, comprising the following steps:
modulating a source signal with a channelization code having a length corresponding to a spreading factor to form a signal intended for transmission over a radio link,
**characterized by**
adapting the spreading factor for use in said modulation step.

2. The method according to claim 1, characterized by the further steps of
determining the availability of channelization codes in the system, and
adapting the spreading factor on the basis of the determined availability of channelization codes.

3. The method according to claim 1 or 2, characterized by the further step of signalling the adapted spreading factor over the radio link.

4. The method according to one of claims 1 to 3, characterized by the further steps of
encoding the source signal, prior to modulation, with a forward error correction (FEC) code rate, and
adapting the FEC code rate.

5. The method according to claim 4, characterized in that the FEC code rate is adapted in accordance with the determined availability of channelization codes and/or the adapted spreading factor.

6. The method according to claim 4 or 5, characterized by the further step of signalling the adapted FEC code rate over the radio link.

7. The method according to one of claims 1 to 6, characterized in that said adaptation step for the spreading factor and/or code rate is carried out in accordance with a measurement of at least one of the parameters of channel quality, interference, system capacity, transmit power or link quality.

8. The method according to claim 7, characterized in that said measurement is reported from a receiver to a transmitter on request and/or periodically.

9. The method according to one of claims 1 to 8, characterized in that said adaptation step for the spreading factor and/or FEC code rate is carried out on an individual basis for at least one user of the system.

10. The method according to one of claims 1 to 9, characterized in that said adaptation step for the spreading factor and/or FEC code rate is carried out on the basis of a comparison of an estimated system parameter value calculated for the current code rate and/or spreading factor with a predicted system parameter value calculated for code rate and/or spreading factor after a potential change.

11. The method according to one of the claims 1 to 10, characterized in that said adaptation step for the spreading factor and/of FEC code rate is carried out in accordance with an adaptation of the information bit rate of the source signal.

12. The method according to one of the claims 1 to 11, characterized in that said adaptation step for spreading factor and/of FEC code rate is carried out in accordance with the properties of a retransmission algorithm.

13. A method of receiving signals in a CDMA cellular radio transmission system, comprising the following steps:
receiving a modulated signal transmitted over a radio link,
**characterized by**
determining the spreading factor used in an adaptive manner for modulating the received signal, and
demodulating the received signals using the determined spreading factor with a channelization code having a length corresponding to the spreading factor.

14. The method according to claim 13, characterized by the further steps of
determining the forward error correction (FEC) code rate used for encoding the received signals, and
decoding the demodulated signals using the determined FEC code rate.

15. The method according to claim 13 or 14, characterized in that the determination step includes receiving a transport format indicator indicating the spreading factor and/or FEC code rate.

16. The method according to claim 15, characterized in that said determination step includes demodulating the transport format indicator in advance and for each frame of received signals.

17. A transmitter in a CDMA cellular radio transmission system, comprising:
modulation means (15) for modulating a signal from a source (10) with a channelization code having a length corresponding to a spreading factor to form a signal intended for transmission over a radio link,
**characterized by**
a control unit (13) for adapting the spreading factor for use in said modulation means (15).

18. The transmitter according to claim 17, characterized in that said control unit (13) receives information on the availability of channelization codes in the system and adapts the spreading factor on the basis of said information.

19. The transmitter according to claim 18, characterized by signalling means (14) for signalling the information on the availability of channelization codes to a receiver.

20. The transmitter according to claim 18 or 19, characterized by further comprising a multiplexer (14) for inserting a transport format indicator into the signal to be transmitted.

21. The transmitter according to one of claims 17 to 20, characterized by further comprising an encoder (11) for encoding the signal from the source (10) with a forward error correction (FEC) code rate and in that the control unit (13) adapts the FEC code rate.

22. The transmitter according to one of claims 17 to 20, characterized by further comprising a source encoder (11) with multiple modes which are adjustable by the control unit (13).

23. The transmitter according to one of claims 17 to 22, characterized by further comprising power control means (13) for controlling the transmit power in accordance with the adapted spreading factor and/or FEC code rate.

24. The transmitter according to one of claims 17 to 23, characterized in that said transmitter is embodied as a base station.

25. A receiver in a CDMA cellular radio transmission system, comprising:
a receiving unit (17) for receiving a modulated signal transmitted over a radio link,
**characterized by**
means (19, 23) for determining the spreading factor used in an adaptive manner for modulating the received signal, and
a demodulator (18) for demodulating the received signals using the determined spreading factor with a channelization code having a length corresponding to the spreading factor.

26. The receiver according to claim 25, characterized by further comprising:
means (19, 23) for determining the forward error correction (FEC) code rate used for encoding the received signal, and
a decoder (21) for decoding the demodulated signal using the determined FEC code rate.

27. The receiver according to claim 25 or 26, characterized in that the means for determining include a control unit (23) for receiving a transport format indicator indicating the spreading factor and/or the FEC code rate.

28. The receiver according to claim 27, characterized in that the control unit (23) is adapted to demodulate the transport format indicator in advance and for each frame of the received signal.

29. The receiver according to one of claims 25 to 28, characterized in that said transmitter is embodied as a mobile station.
